# FASCICULE DE BREVET EUROPEEN

(11) **EP 1 734 702 B1**
(45) Date de publication et mention de la délivrance du brevet: **17.12.2008**
(21) Numéro de dépôt: 06115519.8
(22) Date de dépôt: 15.06.2006
(51) Int. Cl.: H04L 12/46, H04L 12/40, H04J 3/16

(54) **Encapsulation de trames STM-n/STS-m sous éthernet**
Einkapselung von STM-n/STS-m Rahmen in Ethernet
Encapsulation of STM-n/STS-m frames under Ethernet

(30) Priorité: 17.06.2005 FR 0551653
(43) Date de publication de la demande: 20.12.2006
(73) Titulaire: Alcatel Lucent, 75008 Paris (FR)
(72) Inventeur: Dollo, Philippe, 22300, LANNION (FR); Stephan, Yannick, 22730, TREGASTEL (FR)
(74) Mandataire: Sciaux, Edmond

(56) Documents cités:
- ANDREW G MALIS TELLABS PRAYSON PATE OVERTURE NETWORKS RON COHEN RESOLUTE NETWORKS DAVID ZELIG CORRIGENT SYSTEMS: "SONET/SDH Circuit Emulation over Packet (CEP)" IETF STANDARD-WORKING-DRAFT, INTERNET ENGINEERING TASK FORCE, IETF, CH, vol. pwe3, no. 10, février 2005 (2005-02), XP015026059 ISSN: 0000-0004

## Description

L'invention concerne les réseaux de transport, et plus particulièrement l'interconnexion entre les réseaux de transport synchrone de type SDH/SONET (« Synchronous Digital Hierarchy / Synchronous Optical NETwork » - hiérarchie numérique synchrone / réseau optique synchrone) et les réseaux de transport asynchrone.

Comme le sait l'homme de l'art, à chaque type de réseau de transport correspond au moins un type de trame de transport de données. Ainsi, dans les réseaux synchrones de type SDH/SONET les données sont transmises sous la forme de trames dites STM-n (pour « Synchronous Transport Module-n » dans le cas SDH) ou STS-m (pour « Synchronous Transport Signal-m » dans le cas SONET), tandis que dans les réseaux asynchrones les données peuvent être transmises sous la forme de trames dites Ethernet.

Pour que des réseaux de types différents puissent échanger leurs trames respectives, il est indispensable de prévoir au niveau de leurs interfaces de connexion des équipements capables de transformer (par exemple encapsuler) une partie au moins des trames qu'ils reçoivent d'un réseau d'un type donné en trames compréhensibles et transportables par un réseau d'un autre type, sans perte d'information.

Il a ainsi été proposé de transporter les données utiles (ou « payload ») contenues dans les champs appelés VC-4 ou VC-12 des trames STM-n/STS-m, provenant d'un réseau synchrone SDH/SONET et destinées à un réseau asynchrone, en les intégrant dans la partie dédiée aux données utiles au sein de trames Ethernet. C'est ce que l'on appelle généralement « le transport sur Ethernet ». Cette technique est notamment décrite dans les documents du groupe de travail PWE3 de l'IETF cf. par exemple A.G. Malis et al. "Sonet/SDH Circuit Emulation over Packet".

Un inconvénient de cette technique réside dans le fait que seules les données utiles des trames STM-n/STS-m sont transmises dans les trames Ethernet, et non pas les entêtes des trames (ou « overhead ») et le rythme associé aux trames. Par conséquent, il n'est pas possible de procéder au sein d'un même équipement de réseau à la terminaison de trames STM-n/STS-m de types différents, c'est-à-dire provenant de réseaux de types différents.

Par ailleurs, cette technique s'avère incompatible avec la mise en oeuvre de certaines fonctionnalités offertes par certaines architectures récentes, telles que celle dite aTCA. En effet, l'architecture aTCA offre une modularité aux équipements de télécommunication, mais elle n'offre pas une indépendance entre la protection des lignes STM-n/STS-m (appelée APS pour « Automatic Protection Switch ») et la protection des cartes de terminaison de lignes (appelée EPS pour « Equipment Protection Switching »).

L'invention a donc pour but d'améliorer la situation, et notamment de permettre le transport de trames STM-n/STS-m sur Ethernet au sein, par exemple, d'une architecture aTCA.
1. Elle propose à cet effet un dispositif de traitement de trames de données de type STM-n/STS-m, pour un réseau de communication Ethernet, comprenant au moins une interface de lignes STM-n/STS-m, agencée pour recevoir des trames de données de type STM-n/STS-m d'un réseau de communication, et des moyens de traitement agencés, en cas de réception de données d'une trame STM-n/STS-m provenant de ladite interface, pour
   i) segmenter toute ladite trame reçue en m groupes de p octets successifs, les p octets qui constituent l'un des m groupes pouvant appartenir à des lignes successives d'une trame STM-1 ,
   ii) puis associer à chaque groupe un entête de contrôle comprenant des données représentatives de leur position au sein de la trame STM-n/STS-m,
   iii) encapsuler chaque groupe et l'entête de contrôle associé dans un champ de données utiles d'une trame Ethernet ;
**caractérisé en ce que** la segmentation prend en compte, au fil de l'eau, toutes les données qui sont contenues dans une trame STM-n/STS-m ;
et en ce que lesdites trames Ethernet comprennent des données représentatives d'informations de justification négative ou nulle ou positive.

Le dispositif selon l'invention peut comporter d'autres caractéristiques qui peuvent être prises séparément ou en combinaison, et notamment :
- ses moyens de traitement peuvent être chargés, d'une première part, de procéder à la segmentation au fur et à mesure de la réception des données d'une trame STM-n/STS-m, d'une deuxième part, d'associer un entête de contrôle à un groupe dès que ce groupe a été constitué par segmentation, d'une troisième part, d'encapsuler un groupe et l'entête de contrôle associé dans une trame Ethernet dès que l'association de cet entête à ce groupe a été effectuée, et d'une quatrième part, de transmettre successivement m trames Ethernet constituées selon une périodicité choisie ;
- le nombre de groupes m peut être égal à 9 et le nombre d'octets p de chaque groupe peut être égal à 270 ;
- ses moyens de traitement peuvent être chargés de placer dans un champ d'information (par exemple « Type ») des trames Ethernet des données signalant que leur champ de données utiles contient une portion d'une trame STM-n/STS-m encapsulée ;
- les trames Ethernet comprennent des données représentatives d'informations de justification (ou « stuffing ») négative ou nulle ou positive ;
   ➢ l'entête de contrôle peut comprendre au moins une donnée de bourrage représentative d'une information de justification négative ;
   ➢ chaque groupe de p octets peut comprendre au moins une donnée de bourrage représentative d'une information de justification positive ;
   ➢ l'entête de contrôle peut comprendre des données de contrôle
      représentatives des données de bourrage.

L'invention propose également un équipement d'aiguillage de trames comme spécifié dans la revendication 9.
- au moins un aiguilleur de trames Ethernet comprenant au moins une entrée chargée de recevoir des trames STM-n/STS-m encapsulées sous Ethernet au moyen d'un dispositif de traitement du type de celui présenté ci-avant, et d'aiguiller chaque trame Ethernet reçue sur une sortie choisie parmi au moins deux en fonction du port de destination qui est désigné dans l'entête de la trame Ethernet reçue, et
- au moins deux cartes de terminaison logique de lignes STM-n/STS-m alimentées chacune en trames encapsulées par l'une des sorties de chaque aiguilleur de trames et chargées chacune d'extraire des trames Ethernet reçues les groupes de p octets qu'elles contiennent afin de reconstituer les trames STM-n/STS-m à partir de suites ordonnées de m groupes résultant de leur segmentation antérieure.

D'autres caractéristiques et avantages de l'invention apparaîtront à l'examen de la description détaillée ci-après, et des dessins annexés, sur lesquels :
- la figure 1 illustre de façon schématique et fonctionnelle un exemple de réalisation d'un équipement de terminaison de lignes STM-n/STS-m pourvu d'un dispositif de traitement de trames STM-n/STS-m selon l'invention, et un exemple de réalisation d'un équipement d'aiguillage de trames selon l'invention, et
- la figure 2 illustre de façon schématique les principales étapes d'encapsulation d'une trame STM-n/STS-m sous Ethernet, selon l'invention.

Les dessins annexés pourront non seulement servir à compléter l'invention, mais aussi contribuer à sa définition, le cas échéant.

L'invention a pour objet de permettre le transport sur Ethernet de trames de données de type STM-n/STS-m provenant d'un réseau de transport synchrone de type SDH/SONET, éventuellement au sein d'une architecture aTCA.

Dans ce qui suit, on considère, à titre d'exemple non limitatif, que les trames de données à transporter sur Ethernet sont de type STM-1. Mais, l'invention n'est pas limitée à ce type de trame. Elle concerne effectivement toutes les trames de type STM-n ou STS-m, n et m étant des entiers positifs, provenant d'un réseau de transport synchrone de type SDH ou SONET ou d'un réseau de type PLMN ou UTRAN, et notamment les trames STS-3, STM-4 et STS-12.

Par ailleurs, on considère dans ce qui suit, à titre d'exemple non limitatif, que les trames STM-1 proviennent de réseaux synchrones de type SDH (« Synchronous Digital Hierarchy - hiérarchie numérique synchrone), éventuellement raccordés à un réseau de type PLMN ou UTRAN. Mais les trames STM-1 pourraient provenir d'autres types de réseaux, et notamment d'un réseau asynchrone de type paquet sur SONET (« Packet over SONET »).

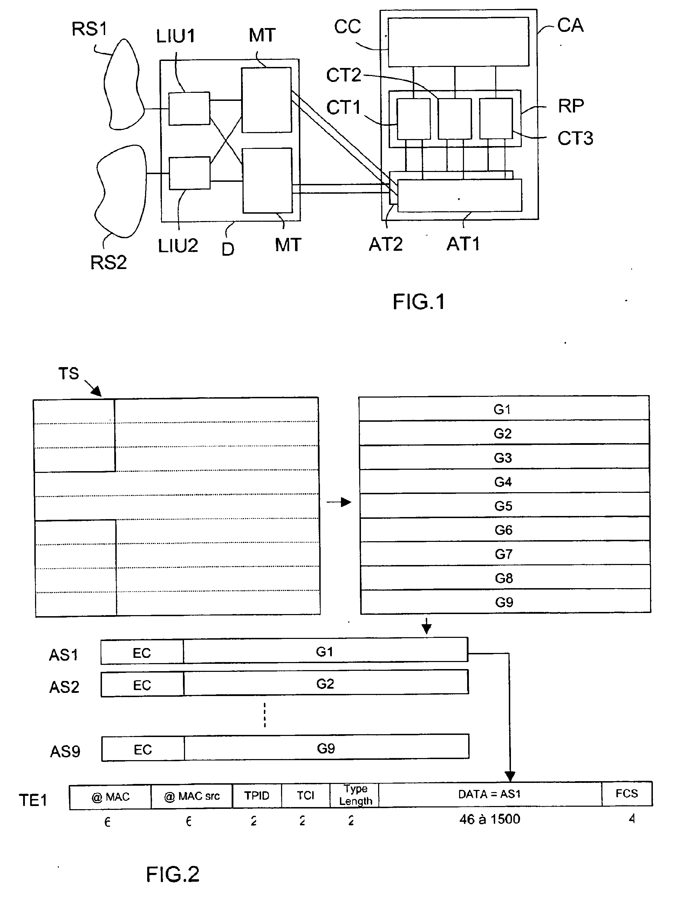

Sur la figure 1 se trouvent représentés schématiquement et de façon fonctionnelle un premier équipement de réseau D couplé à deux réseaux SDH RS1 et RS2, et un second équipement de réseau CA couplé au premier équipement de réseau D.

Le premier équipement de réseau D est un dispositif de traitement de trames STM-1 selon l'invention, que l'on peut également appeler rayonnage auxiliaire (ou « auxiliary shelf »). Ce dispositif D est destiné à terminer physiquement les lignes STM-1 (dans cet exemple) provenant des réseaux SDH RS1 et RS2, et à encapsuler les trames STM-1 qu'il reçoit dans des trames de transport Ethernet. A cet effet, il comprend au moins une interface de lignes STM-1 LlUi couplée à au moins un module de traitement MTj.

Le nombre d'interfaces de lignes STM-1 LlUi dépend du nombre de réseaux qui sont raccordés au dispositif D. Ici, ce nombre est égal à 2 (i = 1 ou 2), mais il peut prendre n'importe quelle valeur entière positive (i > 0). Par ailleurs, le nombre de modules de traitement MTj dépend du nombre d'aiguilleurs de trames Ethernet ATj implantés dans le second équipement de réseau CA, sur lequel on reviendra plus loin. Ici, ce nombre est égal à 2 (j = 1 ou 2), mais il peut prendre n'importe quelle valeur entière positive (j > 0). Par exemple, le second module de traitement MT2 est un module redondant destiné à protéger le premier module de traitement MT1 en cas de problème. Dans ce cas, le second module de traitement MT2 est en veille (inactif) lorsque le premier module de traitement MT1 fonctionne (actif).

Le second équipement de réseau CA est par exemple ce que l'homme de l'art appelle généralement un châssis aTCA. Le châssis CA selon l'invention est destiné à terminer logiquement les lignes STM-1 (dans cet exemple), éventuellement en fonction des types des trames STM-1 qu'ils véhiculent. Il peut éventuellement être raccordé à un réseau Internet (ou IP) afin de lui communiquer les données de voix qui sont extraites des trames STM-1 qui sont encapsulées dans les trames Ethernet qu'il reçoit. Il est important de noter que l'invention n'est pas limitée aux seules architectures de type aTCA.

Ce châssis CA comprend au moins un aiguilleur de trames Ethernet ATj, un équipement de réseau RP, couplé à chaque aiguilleur de trames ATj et que l'homme de l'art appelle généralement un rayonnage principal (ou « main shelf »), et une carte de contrôle et de commutation CC couplée au rayonnage principal RP.

Chaque interface de lignes LlUi est par exemple ce que l'homme de l'art appelle en anglais « Line Interface Unit » (ou LIU - unité d'interface de lignes (ou connexions)). Elle est destinée à terminer physiquement (et non pas logiquement) les lignes (ou connexions) STM-1 (dans cet exemple) qui sont issues du réseau SDH auquel elle est raccordée. On entend ici par « terminer physiquement les lignes STM-1 », le fait de transformer des signaux optiques en signaux électriques (ou des signaux électriques en d'autres signaux électriques en vue d'une adaptation), de façon transparente pour les données contenues dans les trames STM-1.

Chaque interface de lignes LlUi comporte préférentiellement un nombre de sorties égal au nombre de modules de traitement de trames STM-1 MTj équipant le dispositif D. Ainsi, elle peut alimenter en trames STM-1 qu'elle reçoit soit le premier module de traitement de trames STM-1 MT1, soit le second module de traitement MT2 (redondant).

Selon l'invention, chaque module de traitement MTj (j = 1 ou 2) est chargé, lorsqu'il reçoit d'une interface de lignes LIUi des données d'une trame STM-1, de segmenter cette trame en m groupes de p octets successifs.

Par exemple, le nombre de groupes m peut être égal à 9 et le nombre d'octets p de chaque groupe peut être égal à 270. Bien entendu, d'autres valeurs peuvent être choisies pour les paramètres m et p. Ces valeurs dépendent en effet du nombre d'octets que contient une trame STM-n ou STS-m à encapsuler, notamment. Les valeurs 9 et 270, respectivement pour m et p, sont particulièrement bien adaptées aux trames STM-1 du fait qu'elles sont constituées sous la forme de 270 colonnes de 9 lignes (ou rangées), chaque ligne d'une colonne comportant un octet (de données), comme cela est partiellement illustré dans la partie supérieure gauche de la figure 2 (qui représente schématiquement une trame STM-1 TS).

Il est important de noter que la segmentation prend en compte toutes les données (ou bits) qui sont contenues dans une trame STM-1 TS. Un exemple de segmentation d'une trame STM-1 TS en 9 groupes G1 à G9 de 270 (p) octets est schématiquement illustré dans la partie supérieure droite de la figure 2.

Le module de traitement MTj est également chargé d'associer un entête de contrôle EC à chaque groupe résultant d'une segmentation. Cet entête de contrôle EC comprend au moins des données représentatives du numéro du groupe Gk (ici k = 1 à m) au sein de sa trame d'origine. Par exemple, l'entête de contrôle EC comprend 8 octets.

Par ailleurs, chaque trame synchrone STM-1 devant être transmise dans m trames asynchrones Ethernet TEk, les entêtes de contrôle EC comprennent préférentiellement des données représentatives d'informations de justification (ou « stuffing ») positive, nulle ou négative, afin que le transport des trames STM-1 sur Ethernet jusqu'au châssis CA soit dépourvu d'erreur. A cet effet, chaque entête de contrôle EC est préférentiellement placé devant le groupe d'octets Gk auquel il est associé.

La justification utilise par exemple quatre bits C1, C2, S1 et S2. Deux de ces quatre bits sont des données dites de bourrage respectivement négatif (S1) et positif (S2), destinées à compenser un rythme de trame inférieur ou supérieur à un rythme de référence. Les deux autres bits sont des données dites de contrôle (C1 et C2) destinées à signaler respectivement si les deux autres données de justification sont ou non des données de bourrage négatif ou positif.

Par exemple, les deux données de contrôle C1 et C2 et l'une des deux données de bourrage S1 (justification négative) sont contenues dans l'entête de contrôle EC, de préférence à la fin de celui-ci et dans cet ordre (C1,C2,S1). La seconde donnée de bourrage S2 (justification positive) est de préférence placée juste après S1, c'est-à-dire en première position dans le premier des p octets de chaque groupe Gk.

La justification est rendue possible grâce à l'invention du fait que l'intégralité de la trame STM-1 est encapsulée dans m trames Ethernet, et donc que les informations relatives au rythme peuvent être transportées.

Le résultat de l'association d'un entête de contrôle EC à un groupe Gk constitue un bloc ASk (où k = 1 à m). Un exemple d'association d'un entête de contrôle EC aux 9 groupes G1 à G9, résultant de la segmentation d'une trame STM-1 TS et aboutissant à la constitution de 9 blocs AS1 à AS9, est schématiquement illustré dans la partie intermédiaire de la figure 2.

Il est important de noter que les p (270) octets qui constituent l'un des m (9) groupes Gk n'appartiennent pas obligatoirement à une même ligne d'une trame STM-1 (comme c'est le cas dans l'exemple non limitatif de la figure 2). Ils peuvent être « flottants » et donc appartenir à des lignes successives, en particulier lorsque les données des trames sont traitées au fil de l'eau (ou à la volée).

Le module de traitement MTj est également chargé d'encapsuler chaque bloc ASk (constitué d'un entête de contrôle EC et d'un groupe d'octets Gk) dans le champ dédié aux données utiles (ou payload) d'une trame Ethernet TEk. Le bloc AS1 est encapsulé dans une trame Ethernet TE1, le bloc AS2 est encapsulé dans une trame Ethernet TE2, et ainsi de suite jusqu'au bloc AS9 qui est encapsulé dans une trame Ethernet TE9.

Un exemple de trame Ethernet TE1, dont le champ de payload (DATA) comprend le premier bloc AS1 encapsulé, est schématiquement illustré dans la partie inférieure de la figure 2. Les chiffres placés en dessous des différents champs constituant la trame Ethernet indiquent le nombre d'octets qu'ils contiennent respectivement. Comme on peut le constater, la trame Ethernet TEk constituée est classique. Son champ « Type » comporte préférentiellement des données qui signalent que les données contenues dans le champ DATA suivant constituent une portion d'une trame STM-1.

Les données d'une trame STM-1 reçue sont préférentiellement traitées par le module de traitement MTj au fur et à mesure de leur arrivée, et non pas une fois qu'elles ont toutes été reçues. Plus précisément, le module de traitement MT procède à la segmentation d'une trame STM-n/STS-m au fur et à mesure de la réception de ses données (mode de fonctionnement dit « à la volée »). Dès que les 270 premiers octets ont été reçus, le module de traitement MT les assimile à un premier groupe G1, puis il associe à ce groupe G1 un entête de contrôle EC afin de constituer un premier bloc AS1 qu'il encapsule dans le champ DATA d'une première trame Ethernet TE1 prête à être transmise au châssis aTCA CA. Puis, il réitère les mêmes étapes avec les 270 octets suivants afin de constituer une seconde trame Ethernet TE2 prête à être transmise au châssis aTCA CA, et ainsi de suite jusqu'à la constitution d'une neuvième trame Ethernet TE9, contenant les 270 derniers octets de la trame STM-1 reçue.

Les m trames Ethernet TEk (ici k = 1 à 9), qui transportent l'intégralité des données d'une trame STM-1, sont préférentiellement transmises successivement selon une périodicité choisie, par exemple toutes les 125/m µs. Ainsi, une trame STM-1 complète peut être transmise au châssis aTCA CA en 125 µs au moyen de 9 trames Ethernet TE1 à TE9.

Les trames Ethernet TEk sont transmises par le dispositif D à l'aiguilleur de trames ATj qui est couplé au module de traitement MTj qui les a constituées.

L'aiguilleur de trames ATj est chargé d'aiguiller les trames, qu'il reçoit sur chacune de ses entrées couplées à un dispositif Dj, vers le rayonnage principal RP.

Le rayonnage principal RP comprend au moins une carte de terminaison de trames STM-1 (ou « termination board ») CTI. Dans l'exemple illustré sur la figure 1, le rayonnage principal RP comprend trois cartes de terminaison de trames STM-1 CT1 à CT3 (1 = 1 à 3) dédiées à la terminaison logique de trames STM-1 de types différents. Par exemple, la carte de terminaison de trames STM-1 CT1 est dédiée aux trames STM-1 comportant des données utiles canalisées (ou « channelized ») correspondant à des applications TDM (« Time Division Multiplexing » - multiplexage temporel), la carte de terminaison de trames STM-1 CT2 est dédiée aux trames STM-1 comportant des données utiles non canalisées (ou « unchannelized ») correspondant à des applications ATM (« Asynchronous Transfer Mode »-mode de transfert asynchrone), et la carte de terminaison de trames STM-1 CT3 est dédiée aux trames STM-1 comportant des données utiles non canalisées correspondant à des applications de type paquets sous SONET (« Packet over SONET »). Afin de protéger les cartes CTI on peut également prévoir des cartes redondantes.

Chaque carte de terminaison de trames STM-1 (ou « termination board ») CTI est chargée de terminer logiquement un type de lignes STM-1 qui véhiculent des données utiles du type auquel elle est dédiée. On entend ici par « terminer logiquement les lignes STM-1 », le fait d'extraire les données encapsulées dans les trames Ethernet afin de les exploiter compte tenu de leurs données d'entête. Par exemple, la terminaison logique consiste à extraire des canaux de voix à 64 kbits des trames STM-1.

La possibilité d'avoir plusieurs cartes de terminaison CTI en parallèle est offerte par l'invention du fait qu'elle permet de transporter sur Ethernet l'intégralité des données contenues dans les trames STM-n/STS-m, et pas seulement leurs données utiles comme c'est le cas dans les équipements de réseau de l'art antérieur.

Lorsque le rayonnage principal RP comprend plusieurs (au moins deux) cartes de terminaison de trames CTI, comme c'est ici le cas, chaque aiguilleur de trames ATj comprend plusieurs sorties couplées chacune à l'une desdites cartes CTI. Ainsi, chaque fois qu'un aiguilleur de trames ATj reçoit une trame Ethernet TEk, il détermine la carte de terminaison de trames STM-1 à laquelle elle est destinée en fonction du port de destination qu'elle désigne. Il n'a plus alors qu'à délivrer la trame Ethernet TEk sur la sortie qui est couplée à la carte de terminaison de trames STM-1 CTI qui possède le port de destination déterminé.

Lorsqu'une carte de terminaison de trames STM-1 CTI reçoit une trame Ethernet TEk, elle extrait de son champ DATA le bloc ASk qu'il contient. Puis, elle utilise les informations contenues dans l'entête de contrôle EC de ce bloc ASk pour déterminer le numéro du groupe Gk qu'il contient (lorsque les p octets d'un groupe Gk comprennent tous les octets de l'une des rangées d'une trame STM-1, le numéro de groupe est un numéro de rangée). La carte de terminaison de trames STM-1 CTI peut ainsi rassembler les m (ici m=9) groupes qui constituent une trame STM-1, initialement reçue par l'une des interfaces de lignes LlUi du rayonnage auxiliaire RA et encapsulée dans m trames Ethernet par l'un des dispositifs Dj de ce même rayonnage auxiliaire RA, afin de reconstituer l'intégralité de cette trame STM-1.

Les données contenues dans les trames STM-1 reconstituées peuvent être soit utilisées localement, soit être (au moins partiellement) transmises à un réseau de communication. Par exemple, le châssis CA peut comporter une carte Internet raccordée à ses aiguilleurs de trames ATj et chargée de transmettre à un réseau Internet (IP), auquel elle est raccordée, la voix sous IP (« VolP »), cette voix étant initialement contenue dans les canaux de voix (à 64 kbits, par exemple) des trames STM-1. Dans ce cas, les canaux de voix sont extraits par l'une des cartes de terminaison de trames STM-1 CTI, puis communiqués à l'un des aiguilleurs de trames ATj qui les communique à son tour à la carte Internet.

La carte de contrôle et de commutation CC est destinée à permettre l'échange de données et/ou d'informations entre des cartes de terminaison de trames STM-1 CTI appartenant à des rayonnages principaux différents au sein du châssis CA.

Le dispositif de traitement Dj selon l'invention, et notamment son module de traitement MT, peuvent être réalisés sous la forme de circuits électroniques, de modules logiciels (ou informatiques), ou d'une combinaison de circuits et de logiciels.

L'invention peut être mise en oeuvre dans des équipements dont l'architecture de commutation s'articule autour de commutateurs (ou « switches ») Ethernet, comme par exemple ceux connus sous le nom de passerelle média voix (ou MGW pour « Media GateWay »), ou dans des contrôleurs de station de base (ou BSC pour « Base Station Controller », ou RNC pour « Radio Network Controller »), ou encore dans des noeuds de type SGSN ou GGSN.

Grâce à l'invention, en présence d'une architecture de type aTCA (laquelle n'est pas limitative), la terminaison physique des lignes peut être effectivement réalisée dans un dispositif de traitement de trames D (ou rayonnage auxiliaire) différent du rayonnage principal (et externe au châssis qui contient ce dernier). Par conséquent, les fonctions offertes par l'architecture aTCA, comme par exemple l'indépendance entre la protection de lignes (ou APS pour « Automatic Protection Switch » - assurée par le dispositif D (ou rayonnage auxiliaire)) et la protection des cartes de terminaison de lignes (ou EPS pour « Equipment Protection Switching »-assurée par le rayonnage principal RP), peuvent être effectivement assurées.

L'invention ne se limite pas aux modes de réalisation de dispositif de traitement, d'équipement de terminaison de lignes STM-n/STS-m, et d'équipement d'aiguillage de trames décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans le cas de trames STM-1 provenant d'un réseau SDH. Mais l'invention n'est pas limitée à ce type de trame et/ou à ce type de réseau. Elle concerne en effet l'encapsulation sous Ethernet de toutes les trames de type STM-n ou STS-m provenant, par exemple, d'un réseau de transport synchrone de type SDH ou SONET, et notamment les trames STS-3, STM-4 et STS-12.

## Revendications

1. Dispositif (D) de traitement de trames de données de type STM-n/STS-m, pour un réseau de communication Ethernet, comprenant au moins une interface de lignes STM-n/STS-m (LIU1), agencée pour recevoir des trames de données de type STM-n/STS-m d'un réseau de communication, et des moyens de traitement (MTj) agencés, en cas de réception de données d'une trame STM-n/STS-m provenant de ladite interface (LIU1), pour
i) segmenter toute ladite trame reçue en m groupes de p octets successifs, les p octets qui constituent l'un des m groupes pouvant appartenir à des lignes successives d'une trame STM-1 ,
ii) puis associer à chaque groupe un entête de contrôle comprenant des données représentatives de leur position au sein de la trame STM-n/STS-m,
iii) encapsuler chaque groupe et l'entête de contrôle associé dans un champ de données utiles d'une trame Ethernet ;
**caractérisé en ce que** la segmentation prend en compte, au fil de l'eau, toutes les données qui sont contenues dans une trame STM-n/STS-m ;
et **en ce que** lesdites trames Ethernet comprennent des données représentatives d'informations de justification négative ou nulle ou positive.

2. Dispositif selon la revendication 1, **caractérisé en ce que** lesdits moyens de traitement (MTj) sont agencés pour :
i) procéder à ladite segmentation au fur et à mesure de la réception des données d'une trame STM-n/STS-m,
ii) associer un entête de contrôle à un groupe dès que ce groupe a été constitué par segmentation,
iii) encapsuler un groupe et l'entête de contrôle associé dans une trame Ethernet dès que l'association dudit entête à ce groupe a été effectuée, et
iv) transmettre successivement les m trames Ethernet constituées selon une périodicité choisie.

3. Dispositif selon l'une des revendications 1 et 2, **caractérisé en ce que** m est égal à 9 et p est égal à 270.

4. Dispositif selon la revendication 1, **caractérisé en ce que** ledit entête de contrôle comprend au moins une donnée de bourrage représentative d'une information de justification négative.

5. Dispositif selon la revendication 1, **caractérisé en ce que** chaque groupe de p octets comprend au moins une donnée de bourrage représentative d'une information de justification positive.

6. Dispositif selon la combinaison des revendications 4 et 5, **caractérisé en ce que** ledit entête de contrôle comprend des données de contrôle représentatives desdites données de bourrage.

7. Dispositif selon la revendication 1, **caractérisé en ce que** lesdits moyens de traitement (MTj) sont agencés pour placer dans un champ d'information desdites trames Ethernet des données signalant que leur champ de données utiles contient une portion d'une trame STM-n/STS-m encapsulée.

8. Dispositif selon la revendication 7, **caractérisé en ce que** ledit champ d'information est le champ « Type ».

9. Equipement d'aiguillage de trames (CA) pour un réseau de communication asynchrone, **caractérisé en ce qu'**il comprend :
i) un dispositif de traitement (D) selon l'une des revendications précédentes et au moins un aiguilleur de trames Ethernet (AT1) comprenant au moins une entrée propre à recevoir des trames Ethernet, dans lesquelles ont été encapsulées des trames STM-n/STS-m au moyen d'un dispositif de traitement (D) selon l'une des revendications précédentes, et à aiguiller chaque trame Ethernet reçue sur une sortie choisie parmi au moins deux en fonction du port de destination désigné dans l'entête de ladite trame Ethernet reçue, et
ii) au moins deux cartes de terminaison logique de lignes STM-n/STS-m (CT1-CT3), de types différents et présentant des ports de destination différents, alimentées chacune en trames encapsulées par l'une desdites sorties de chaque aiguilleur de trames (AT1) et agencées chacune pour extraire, des trames Ethernet reçues, des groupes de p octets qu'elles contiennent, de manière à reconstituer des trames STM-n/STS-m à partir de suites ordonnées de m groupes résultant de leur segmentation antérieure.

## Claims

1. Apparatus (D) for use in an Ethernet communications network for processing STM-n/STS-m type data frames, the apparatus comprising at least one STM-n/STS-m line interface unit (LIU1) adapted to receive STM-n/STS-m type data frames from a communications network and processor means (MTj) adapted on receiving data from an STM-n/STS-m frame coming from said line interface unit (LIU1):
i) to segment the whole of said received frame into m groups of p successive bytes, the p bytes that constitute one of the m groups possibly belonging to successive rows of an STM-1 frame;
ii) then to associate with each group a control header containing data representing its position within the STM-n/STS-m frame; and
iii) to encapsulate each group and the associated control header in a payload data field of an Ethernet frame;
the apparatus being **characterized in that** the segmentation takes account on the fly of all the data contained in an STM-n/STS-m frame; and
**in that** said Ethernet frames contain data representing negative justification, no justification, or positive justification information.

2. Apparatus according to claim 1, **characterized in that** said processor means (MTj) are adapted:
i) to perform said segmentation as and when STM-n/STS-m frame data is received;
ii to associate a control header with a group as soon as that group has been formed by said segmentation;
iii) to encapsulate a group and the associated control header in an Ethernet frame as soon as said header has been associated with that group; and
iv) to transmit the resulting m Ethernet frames successively at a given period.

3. Apparatus according to either claim 1 or claim 2, **characterized in that** m is equal to 9 and p is equal to 270.

4. Apparatus according to claim 1, **characterized in that** said control header comprises one or more stuffing bits representing negative justification information.

5. Apparatus according to claim 1, **characterized in that** each group of p bytes comprises one or more stuffing bits representing positive justification information.

6. Apparatus according to claim 4 combined with claim 5, **characterized in that** said control header contains control data representing said stuffing bits.

7. Apparatus according to claim 1, **characterized in that** said processor means (MTj) are adapted to place in an information field of said Ethernet frames data indicating that their payload data field contains a portion of an encapsulated STM-n/STS-m frame.

8. Apparatus according to claim 7, **characterized in that** said information field is the "Typ" field.

9. Frame switching equipment (CA) for use in an asynchronous communications network, **characterized in that** it comprises:
i) at least one Ethernet frame switch (AT1) having at least one input adapted to receive Ethernet frames in which STM-n/STS-m frames have been encapsulated by means of processor apparatus (D1) according to any one of the preceding claims and to switch each received Ethernet frame to an output selected from at least two outputs as a function of a destination port designated in the header of said received Ethernet frame; and
ii) at least two STM-n/STS-m logical line termination boards (CT1-CT3) of different types, having different destination ports and each being fed with encapsulated frames by one of said outputs of each frame switch (AT1) and adapted to extract from the received Ethernet frames the groups of p bytes that they contain in order to reconstitute STM-n/STS-m frames from ordered series of m groups resulting from their previous segmentation.

## Patentansprüche

1. Vorrichtung (D) zur Verarbeitung von Datenrahmen vom Typ STM-n/STS-m für ein Ethernet-Kommunikationsnetzwerk, mit mindestens einer STM-n/STS-m-Leitungsschnittstelle (LIU1), welche für den Empfang der Datenrahmen vom Typ STM-n/STS-m eines Kommunikationsnetzwerks ausgestaltet ist, und Verarbeitungsmittel (MTj), welche im Fall des Empfangs von der besagten Schnittstelle (LIU1) gesendeten Daten eines STM-n/STS-m-Rahmens dafür ausgestaltet sind, um
i) den gesamten besagten empfangenen Rahmen in m Gruppen von p aufeinanderfolgenden Bytes zu segmentieren, wobei die p Bytes, welche eine der m Gruppen bilden, aufeinanderfolgenden Reihen eines STM-1-Rahmens angehören können,
ii) anschließend jeder Gruppe einen Kontrollheader zuzuordnen, welcher repräsentative Daten für ihre Position innerhalb des STM-n/STS-m-Rahmens enthält,
iii) jede Gruppe und den dazugehörigen Kontrollheader in einem Nutzdatenfeld eines Ethernet-Rahmens einzukapseln;
**dadurch gekennzeichnet, dass** die Segmentierung laufend alle in einem STM-n/STS-m-Rahmen enthaltenen Daten berücksichtigt;
und dass die besagten Ethernet-Rahmen Daten enthalten, die für Informationen über das Vorhandensein von negativen, positiven oder keinen Stopfbits repräsentativ sind.

2. Vorrichtung nach Anspruch 1, **dadurch gekennzeichnet, dass** die besagten Verarbeitungsmittel (MTj) dafür ausgestaltet sind, um:
i) die besagte Segmentierung während des Empfangs der Daten eines STM-n/STS-m-Rahmens nach und nach vorzunehmen,
ii) einer Gruppe einen Kontrollheader zuzuordnen, sobald diese Gruppe durch die Segmentierung gebildet wurde,
iii) eine Gruppe und den dazugehörigen Kontrollheader in einen Ethernet-Rahmen einzukapseln, sobald das Zuordnen des besagten Headers zu dieser Gruppe erfolgt ist, und
iv) nacheinander m entsprechend einer gewählten Periodizität gebildete Ethernet-Rahmen zu übertragen.

3. Vorrichtung nach einem der Ansprüche 1 und 2, **dadurch gekennzeichnet, dass** m gleich 9 und p gleich 270 ist.

4. Vorrichtung nach Anspruch 1, **dadurch gekennzeichnet, dass** der besagte Kontrollheader mindestens eine Bitstopfinformation enthält, welche für eine negative Füllinformation repräsentativ ist.

5. Vorrichtung nach Anspruch 1, **dadurch gekennzeichnet, dass** jede Gruppe von p Bytes mindestens eine Bitstopfinformation enthält, welche für eine positive Füllinformation repräsentativ ist.

6. Vorrichtung entsprechend der Kombination der Ansprüche 4 und 5, **dadurch gekennzeichnet, dass** der besagte Kontrollheader Kontrolldaten enthält, welche für die besagten Fülldaten repräsentativ sind.

7. Vorrichtung nach Anspruch 1, **dadurch gekennzeichnet, dass** die besagten Verarbeitungsmittel (MTj) so ausgestaltet sind, dass Daten, welche signalisieren, dass ihr Nutzdatenfeld eine Portion eines eingekapselten STM-n/STS-m-Rahmens enthält, in ein Informationsfeld der besagten Ethernet-Rahmen eingefügt werden.

8. Vorrichtung nach Anspruch 7, **dadurch gekennzeichnet, dass** das besagte Informationsfeld das "Typ"-Feld ist.

9. Ausrüstung zum Lotsen von Rahmen (CA) für ein asynchrones Kommunikationsnetzwerk, **dadurch gekennzeichnet, dass** sie umfasst:
i) Eine Verarbeitungsvorrichtung (D) nach einem der vorstehenden Ansprüche, und mindestens einen Lotsen für Ethernet-Rahmen (AT1), umfassend mindestens einen Eingang, der fähig ist, Ethernet-Rahmen zu empfangen, in welchen STM-n/STS-m-Rahmen anhand einer Verarbeitungsvorrichtung (D) nach einem der vorstehenden Ansprüche eingekapselt wurden, und jeden empfangenen Ethernet-Rahmen an einem ausgewählten Ausgang der mindestens zwei Ausgänge entsprechend dem im Header des besagten empfangenen Ethernet-Rahmens designierten Ziel-Port zu lotsen, und
ii) mindestens zwei logische Abschlusskarten der STM-n/STS-m-Leitungen (CT1-CT3) verschiedenen Typs mit unterschiedlichen Ziel-Ports, welche jeweils mit durch einen der besagten Ausgänge eines jeden Rahmen-Lotsen (AT1) eingekapselten Rahmen versorgt werden und jeweils dafür ausgestaltet sind, um aus den empfangenen Ethernet-Rahmen darin enthaltene Gruppen von p Bytes zu extrahieren, so dass ausgehend von geordneten Folgen von m Gruppen, welche aus der zuvor erfolgten Segmentierung entstanden sind, die STM-n/STS-m-Rahmen wieder hergestellt werden.
